# EUROPÄISCHE PATENTSCHRIFT

(11) **EP 1 178 230 B1**
(45) Veröffentlichungstag und Bekanntmachung des Hinweises auf die Patenterteilung: **01.03.2006**
(21) Anmeldenummer: 01810725.0
(22) Anmeldetag: 20.07.2001
(51) Int. Cl.: F16C 33/78

(54) **Lagerdichtung**
Bearing sealing
Joint d'étanchéité pour palier

(30) Priorität: 31.07.2000 DE 10037150
(43) Veröffentlichungstag der Anmeldung: 06.02.2002
(73) Patentinhaber: HILTI Aktiengesellschaft, 9494 Schaan (LI)
(72) Erfinder: Donner, Hans-Christian, 85757 Karlsfeld (DE)
(74) Vertreter: Wildi, Roland

(56) Entgegenhaltungen:
- DE-A- 4 215 905
- US-A- 2 188 857

## Beschreibung

Die Erfindung bezeichnet eine Lagerdichtung, insbesondere für Wälzlager, welche mit hohen Drehzahlen umlaufen und Schmiermittel wie Öl oder Fett beinhalten.

Bezüglich der Abdichtung von mit hohen Drehzahlen umlaufenden Innenlagerringen bezüglich einem, durch ein Lager getrennten, ein Schmiermittel enthaltenden Halbraum und einem schmiermittelfreien Halbraum, sind die Lager mit Lagerdichtungen ausgebildet.

Nach der US3915519 weist die in einem Gleitlager gelagerte Welle drehrichtungsabhängige spiralförmige Fördernuten für das Schmiermittel auf, welche das Schmiermittel in das Lagerinnere fördern, wodurch zur Lagerung innerhalb des Gleitlagers ein hydrodynamischer Überdruck des Schmiermittels entsteht sowie zur Lagerdichtung das Schmiermittel stets zurück in das Lager gefördert wird.

Ebenso bildet eine Lagerdichtung mit einer gleitend umlaufenden, linienförmig auf dem Innenlagerring aufliegenden, Dichtkante an einer kreisringförmigen, elastischen Dichtlippe, die längs eines rotierenden Innenlagerrings einen mit Öl oder Fett befüllten angetriebenen Teil wie ein Getriebe und einen schmiermittelfreien Teil trennt, mit einem Wälzlager mit einem einseitig offenen Wälzkörperkäfig ein System aus, wobei durch die Wälzkörperbewegung das im Lager befindliche Schmiermittel in Richtung der offenen Seite des Wälzkörperkäfigs herausgedrückt wird und drehrichtungsabhängig ausgeführte Drallnuten das Schmiermittel zurück in das Lager und zu der Dichtkante fördern. Durch die Förderkraft der Drallnuten kann im Bereich der Dichtkante gegen deren, durch die elastische Dichtlippe erzeugte, Vorspannung ein lokaler hydrodynamischer Überdruck des Schmiermittels entstehen, wodurch die Vorspannung der Dichtkante überwunden und somit zwischen der Dichtkante und dem Innenlagerring ein Leck für das Schmiermittel entsteht.

Nach der DE4215905A1 weist die Dichtlippe an der, bezüglich des ein Schmiermittel enthaltenden Halbraums, inneren Seite radial spiralförmig ausgeführte Noppen auf, welche einen radialen Wendelgang mit dazwischenliegenden Wendelnuten ausbilden. Durch die hohe Drehzahl des Innenlagerrings wird das Schmiermittel hydrodynamisch von einem radial innen liegenden Dichtspalt weg in Richtung eines Aussenlagerrings gedrückt.

Die Aufgabe der Erfindung besteht in der Realisierung einer einfachen Lagerdichtung für ein Lager, welche auch bei hohen Drehzahlen gleichzeitig eine gute Abdichtung und eine ausreichende Schmierung des Lagers ermöglicht.

Die Aufgabe wird im wesentlichen durch die Merkmale der unabhängigen Ansprüche gelöst. Vorteilhafte Weiterbildungen ergeben sich aus den Unteransprüchen.

Im wesentlichen sind bei einer, zwischen einem Aussenlagerring und einem innerhalb koaxial drehbar gelagerten Innenlagerring angeordneten, Lagerdichtung mit einer elastischen Dichtlippe, welche linienförmig gleitend am Innenlagerring aufliegt, an der, bezüglich des ein Schmiermittel enthaltenden Halbraums, inneren Seite der Dichtlippe radiale Wendelgänge angeordnet, welche im montierten Zustand linienförmig auf der Oberfläche des Innenlagerrings aufliegen. Dadurch ist sowohl eine ausreichende Schmierung der Dichtlippe als auch eine ausreichende Dichtheit auch bei hohen Drehzahlen gewährleistet.

Vorteilhaft nimmt die Höhe der radialen Wendelgänge radial nach außen hin zu, wodurch die Förderung des Schmiermittels weiter erhöht wird, ohne die Abdichtung zu verringern.

Vorteilhaft weist zur Sicherstellung der Lebensdauer der Dichtkante die zugeordnete Oberfläche des Innenlagerrings bezüglich der Rauhigkeit eine hohe Oberflächengüte auf.

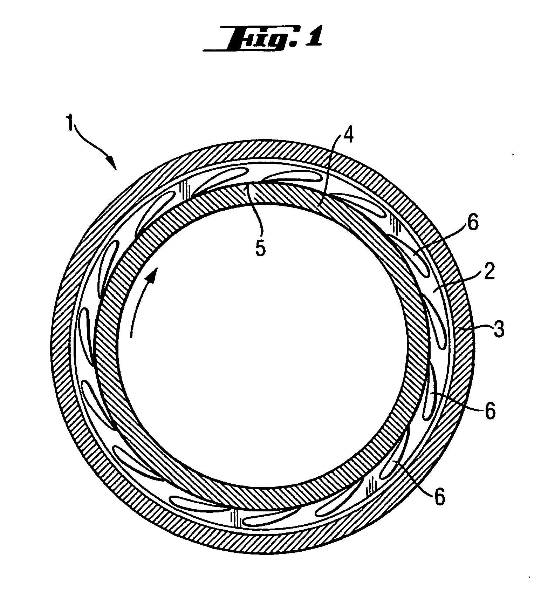

Die Erfindung wird bezüglich eines vorteilhaften Ausführungsbeispiels näher erläutert mit: Fig. 1 als Lagerdichtung.

Nach Fig. 1 ist eine Lagerdichtung 1 mit einer elastischen Dichtlippe 2 zwischen einem Aussenlagerring 3 und einem innerhalb koaxial drehbar gelagerten Innenlagerring 4 angeordnet, wobei die Dichtlippe 2 mit einer Dichtkante 5 linienförmig gleitend am Innenlagerring 4 aufliegt, und an der in Fig. 1 dargestellten, bezüglich des ein Schmiermittel enthaltenden Halbraums, inneren Seite der Dichtlippe 2 radiale Wendelgänge 6 aufweist, welche im montierten Zustand linienförmig auf der Oberfläche des Innenlagerrings 4 aufliegen und deren Höhe radial nach außen hin zunimmt.

## Patentansprüche

1. Lagerdichtung mit einer elastischen Dichtlippe (2), welche zwischen einem Aussenlagerring (3) und einem innerhalb koaxial drehbar gelagerten Innenlagerring (4) angeordnet ist und mit einer Dichtkante (5) linienförmig gleitend am Innenlagerring (4) aufliegt, wobei an der, bezüglich des ein Schmiermittel enthaltenden Halbraums, inneren Seite der Dichtlippe (2) radiale Wendelgänge (6) angeordnet sind, **dadurch gekennzeichnet, dass** die Wendelgänge (6) im montierten Zustand linienförmig auf der Oberfläche des Innenlagerrings (4) aufliegen.

2. Lagerdichtung nach Anspruch 1, **dadurch gekennzeichnet, dass** die Höhe der radialen Wendelgänge (6) radial nach außen hin zunimmt.

3. Lagerdichtung nach Anspruch 1 oder Anspruch 2, **dadurch gekennzeichnet, dass** die der Dichtkante (5) zugeordnete Oberfläche des Innenlagerrings (4) bezüglich der Rauhigkeit eine hohe Oberflächengüte aufweist.

## Claims

1. Bearing seal with an elastic sealing lip (2) arranged between an external bearing ring (3) and an internal bearing ring (4) coaxially rotary mounted therein and seated so as to slide in line with a sealing edge (5) on the interior bearing ring (4), and radial helical tracks (6) are arranged on the inner side of the sealing lip (2) relative to a lubricant containing semi-space, **characterised in that** the helical tracks (6) are in the assembled stated seated in line on the surface of the internal bearing ring (4).

2. Bearing seal according to Claim 1, **characterised in that** the height of the radial helical tracks (6) increases radially outward.

3. Bearing seal according to Claim 1 or Claim 2, **characterised in that** the surface of the internal bearing ring (4) associated with the sealing edge (5) has a high surface quality relative to roughness.

## Revendications

1. Joint de palier avec une lèvre d'étanchéité élastique (2) qui est disposée entre une bague extérieure de palier (3) et une bague intérieure de palier (4) montée en rotation coaxiale à l'intérieur de celle-ci et qui, par l'intermédiaire d'un bord d'étanchéité (5), repose avec un glissement linéaire sur la bague intérieure de palier (4), des passages hélicoïdaux radiaux (6) étant ménagés sur le côté de la lèvre d'étanchéité (2) situé à l'intérieur par rapport au demi-volume contenant un lubrifiant, **caractérisé en ce qu'**en position montée les passages hélicoïdaux (6) reposent de manière linéaire sur la surface de la bague intérieure de palier (4).

2. Joint de palier selon la revendication 1, **caractérisé en ce que** la hauteur des passages hélicoïdaux radiaux (6) augmente radialement vers l'extérieur.

3. Joint de palier selon la revendication 1 ou la revendication 2, **caractérisé en ce que** la surface de la bague intérieure de palier (4) associée au bord d'étanchéité (5) présente, en ce qui concerne la rugosité, une qualité de surface élevée.
